# NEUE EUROPÄISCHE PATENTSCHRIFT

(11) **EP 1 630 037 B2**
(45) Veröffentlichungstag und Bekanntmachung des Hinweises auf die Entscheidung über den Einspruch: **08.07.2015**
(45) Hinweis auf die Patenterteilung: 13.12.2006
(21) Anmeldenummer: 04020585.8
(22) Anmeldetag: 31.08.2004
(51) Int. Cl.: B60P 1/44

(54) **Teil-Hubladebühne**
Partial loading platform
Plate-forme de charge partielle

(43) Veröffentlichungstag der Anmeldung: 01.03.2006
(73) Patentinhaber: Bär, Gerd, 74078 Heilbronn (DE)
(72) Erfinder: Bär, Gerd, 74078 Heilbronn (DE)
(74) Vertreter: DREISS Patentanwälte PartG mbB

(56) Entgegenhaltungen:
- EP-A- 0 587 214
- EP-A- 1 223 077
- US-B1- 6 375 404

## Beschreibung

Die vorliegende Erfindung betrifft eine Hubladebühne zur Befestigung an Fahrzeugen, mit einer Plattform und einem im Wesentlichen parallelogrammförmigen Hubwerk, das zwei horizontal beabstandete Tragarme zum Tragen der Plattform, mindestens einen Parallelzylinder für das Verschwenken der Plattform um eine Schwenkachse von ihrer vertikalen Fahrtstellung in ihre horizontale Arbeitsstellung und umgekehrt sowie mindestens einen Hubzylinder zum Heben und Senken der Plattform in ihrer Arbeitsstellung umfasst.

Eine solche Hubladebühne wird in EP 1223077 A offenbart.

Eine Hubladebühne mit den Merkmalen des Oberbegriffs des Anspruchs 1 ist durch eine offenkundije Vorbenutzung einer Hubladebühne der Herstellermarke Behrens vorbekannt.
Die Schwenkachse der Plattform ist an Laschen drehbar gelagert, die von einem die Tragarme starr verbindenden Querträger vorstehen.

Hubladebühnen in der so genannten Standardversion haben eine einteilige Plattform, die hinter dem Aufbau steht oder diesen verschließt. Eine Unterausführung dieser Standard-Hubladebühnen sind solche, die sich nur über einen Teil der Fahrzeugbreite erstrecken. Aus diesem Grund werden sie auch Teil-Hubladebühne genannt. Solche Teil-Hubladebühnen verwendet man bei mittleren und kleineren Verteilerfahrzeugen, bei denen sowohl größere, rollbare Lasten mit der Hubladebühne abgeladen werden müssen als auch kleinere Sendungen, wie Pakete, die getragen werden können, direkt entnommen werden.

Bei zweiflügligen Türen muss die Hubladebühne eine Plattformbreite haben, die in der Breite so gehalten ist, dass mindestens eine Türe geöffnet werden kann, ohne dass die Hubladebühne geöffnet werden muss. Dies beruht zum einen auf Zeitgründen, zum anderen aber sind diese Art Fahrzeuge in der Regel Kühl- oder gar Tiefkühlfahrzeuge, bei denen man den Öffnungsquerschnitt zur Vermeidung des Kälteausfalls klein halten möchte. Solche Hubladebühnen gibt es in einer Eindrittelversion (Fahrzeug hat dreiteilige Türen), in einer Halbversion (Fahrzeug hat zwei gleich große Türen) und in einer Zweidrittelversion (Fahrzeug hat dreiteilige Türen).

In allen Versionen richtet sich das Hubwerk einerseits nach der Plattformbreite. Die Befestigung des Hubwerks am Fahrgestell bzw. am Montagerahmen-Aufbau erfolgt auf übliche Weise. Daraus folgt, dass für die Eindrittelversion je ein linkes und rechtes Hubwerk und für die Halb- und Zweidrittelversionen auch je ein rechtes und linkes Hubwerk gebraucht wird. Obschon das Hubwerk in allen Ausführungen beiderseits am Fahrzeugrahmen befestigt wird, erfolgt die Kräfteeinleitung im wesentlichen doch auf diejenige Rahmenseite, auf der sich die Plattform befindet. Bei mittleren Fahrzeugen ist dies kein Problem, jedoch bei sehr leichten Nutzfahrzeugen. Hier muss nicht nur die Gesamtrahmenkonstruktion für die doppelte Belastung (weil einseitig) ausgelegt werden, sondern auch die Befestigungselemente zwischen Fahrzeugrahmen und Hubwerk. Auch das Hubwerk selbst muss von seiner Grundstruktur voll für die einseitige Belastung gebaut sein. Die fahrzeugseitigen Voraussetzungen führen deshalb bei sehr leichten Nutzfahrzeugen (2,8 t bis 3,5 t) zu Beschränkungen der Tragfähigkeit der Hubladebühne.

Teil-Hubladebühnen in der Halb- und Zweidrittelversion haben nach bisheriger Bauweise ein Trag- oder Hubarmelement immer zwischen den beiden Fahrzeuglängsträgern. Damit ist der Platz verbaut, sowohl für eine Maul- als auch für eine Kugelkopfkupplung. Des weiteren ist in diesem Fall in den meisten Fällen die Schlusstraverse des Fahrzeugrahmens im Wege und muss entfernt oder nach vorne versetzt werden. Wird die Schlusstraverse entfernt, muss allerdings eine aufwändige Ersatzkonstruktion geschaffen werden.

Demgegenüber ist es die Aufgabe der vorliegenden Erfindung, bei einer Hubladebühne der eingangs genannten Art diese Nachteile zu beseitigen.

Diese Aufgabe wird erfindungsgemäß durch eine Hubladebühne mit den Merkmalen des Anspruchs 1 gelöst.

Basis der erfindungsgemäßen Ausführung ist ein Zweizylinderserienhubwerk, welches in Fahrtrichtung links den ersten Tragarm und in Fahrtrichtung rechts den zweiten Tragarm (Hubarm) hat. Die normale Hubladebühne hat eine Plattform, die mit dem Hubwerk durch einen linken und rechten Anschlusskopf verbunden ist. Erfindungsgemäß wird vorgeschlagen, aus dieser "ganzen" Hubladebühne eine Teil-Hubladebühne herzustellen, indem einfach die Plattform so "abgeschnitten" wird, wie sie der Kunde benötigt, und zwar in der Halb- oder Zweidrittelversion.

Im jetzt betrachteten Fall erhalten wir eine Teil-Hubladebühne mit Plattform in Fahrtrichtung links, nachfolgend Linksausführung genannt. Diese Plattform hat durch das "Abschneiden" nur den Anschlusskopf auf der Tragarmseite, die auch den Parallelzylinder beinhaltet. So betrachtet wäre die Plattform quer zur Fahrtrichtung natürlich völlig instabil. Um diese Stabilität herzustellen, wird die Plattform mit dem Verbindungs- oder Querträger, der im Drehpunkt der Tragarme liegt, versehen. Dieser Querträger wird einfach an die Plattform angeschraubt; auf der gegenüberliegenden Seite endet dieser Verbindungsträger mit einem Bolzen, der im zweiten Tragarm (Hubarm) gelagert ist. Damit hat die Plattform eine definierte Führung und Stabilität, auch in Querrichtung. Um der Plattform diese Querstabilität auch bei der Bodenauflage zu verleihen, ist es notwendig, eine zweite Bodenrolle an der Plattform anzubringen. Damit hat die Plattform auch die nötige Querstabilität, wenn sie am Boden aufliegt. Der genannte Verbindungsträger und das Lager im Hubarm müssen so gestaltet werden, dass bei allen Anbausituationen diese Bauteile ca. 10 mm unter der Ladekante zu liegen kommen. Dies ist notwendig, um die öffenbare Türe bei geschlossener Plattform über diese Bauteile hinweg aufschwenken zu können. Wird jetzt eine Teil-Hubladebühne in Rechtsausführung benötigt, muss das Hubwerk auch in Rechtsausführung gebaut sein, d. h. die Tragarmseite muss rechts und die Hubarmseite links angeordnet sein. Die Befestigung am Fahrzeugrahmen bleibt erhalten. Damit ist auch der Raum zwischen den beiden Fahrzeuglangträgern frei und die Anbringung einer Maul- oder einer Kugelkopfkupplung ist möglich, wie bei einer herkömmlichen Hubladebühne.

Die erfindungsgemäße Ausführung erlaubt es auch, bei Bedarf die Plattform breiter zu gestalten als dies von der Erfordernis der Türbreite her möglich wäre. Dies erfolgt dadurch, dass einfach an dieser Stelle ein Klappteil, welches im Längsschnitt der Plattform entspricht, angebracht wird. Erfindungsgemäß wird vorgeschlagen, das durch Widerlager auskragende Klappteil zusätzlich auf dem Querträger aufliegen zu lassen, was dem Klappteil eine sehr hohe Stabilität verleiht und äußerst breite Klappteile ermöglicht.

Bei kleinen Nutzfahrzeugen, wie Kastenwagen ist die Breite der Plattform einerseits durch die vorgeschriebene Einsehbarkeit der Rückbeleuchtung und andererseits von der mittigen Türteilung begrenzt. Diese schmale Plattform ist für den Transport von Paletten zu schmal. Durch die vorgeschlagene Technik kann das Klappteil so breit gewählt werden, wie die Plattform selbst. Dadurch hat der Nutzer eine vollwertige Hubladebühne mit "ganzer" Plattform.

Durch die erfindungsgemäße Ausführung ist es erstmalig möglich, auch bei kleinen Nutzfahrzeugen, wie Kastenwagen, eine palettenfähige Ladehilfe mit mehr als 500 kg Tragfähigkeit zu verwenden, die gleichzeitig den freien Zugang über die rechte Flügeltüre zum Laderaum ermöglicht.

Die Plattform kann in der Arbeitsstellung viel breiter gewählt werden als beim Stand der Technik. Dies bietet zum einen bei kleinen Fahrzeugen überhaupt die Möglichkeit zum Transport einer Euro-Palette samt Hubwagen und bei großen Fahrzeugen bietet eine breite Plattform bessere Manövriermöglichkeit beim Ausladen aus dem Fahrzeug und gewährt dem Bedienpersonal eine bessere Standsicherheit durch eine größere Plattform.

Die erfindungsgemäße Ausführung schränkt die Verwendung von Anhängekupplungen nicht ein und führt zu einer enormen Reduzierung der Bauteile. Der Hersteller hat mit seinem Serienhubwerk bereits auch ein Hubwerk für die Teil-Hubladebühne (rechts oder links). Es wird lediglich ein Hubwerk in der Gegenversion benötigt. Symmetrische Kräfteeinleitung in das Fahrzeug erlaubt eine gewichtsgünstige Bauweise.

Weitere bevorzugte Ausgestaltungen der Erfindung sind Gegenstand der Unteransprüche. Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: die Rückansicht der erfindungsgemäßen Teil-Hubladebühne in Zweidrittelversion;
- Fig. 2: eine perspektivische Ansicht der in Fig.1 gezeigten Teil-Hubladebühne;
- Fig. 3: die in Fig.1 gezeigte Hubladebühne mit arbeitsbereiter, aufgeklappter Plattform auf Ladebodenhöhe des nicht dargestellten Fahrzeugs; und
- Fig. 4: die in Fig. 3 gezeigte Hubladebühne mit einem auf das Plattform-Festteil um 180° aufgefalteten Plattform-Klappteil.

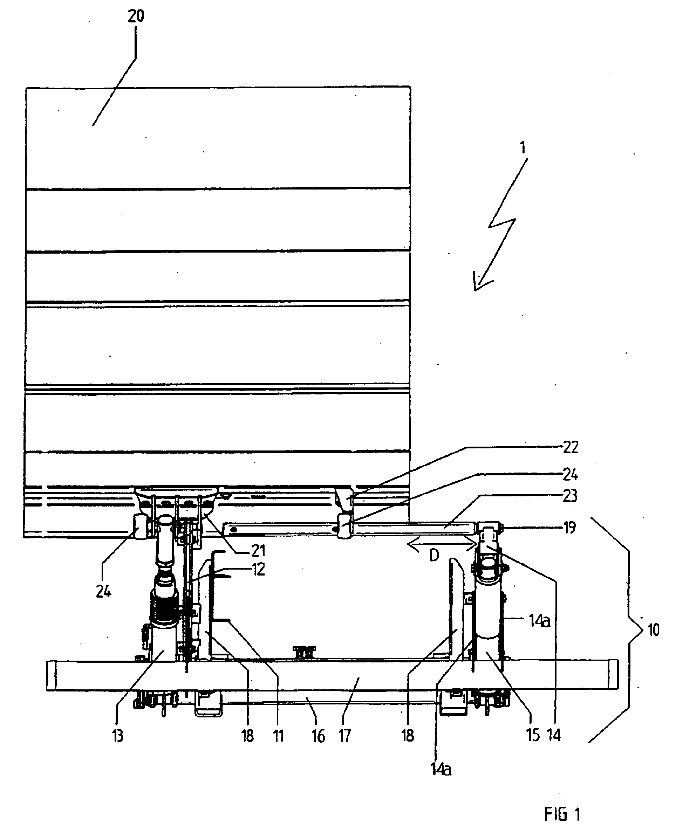

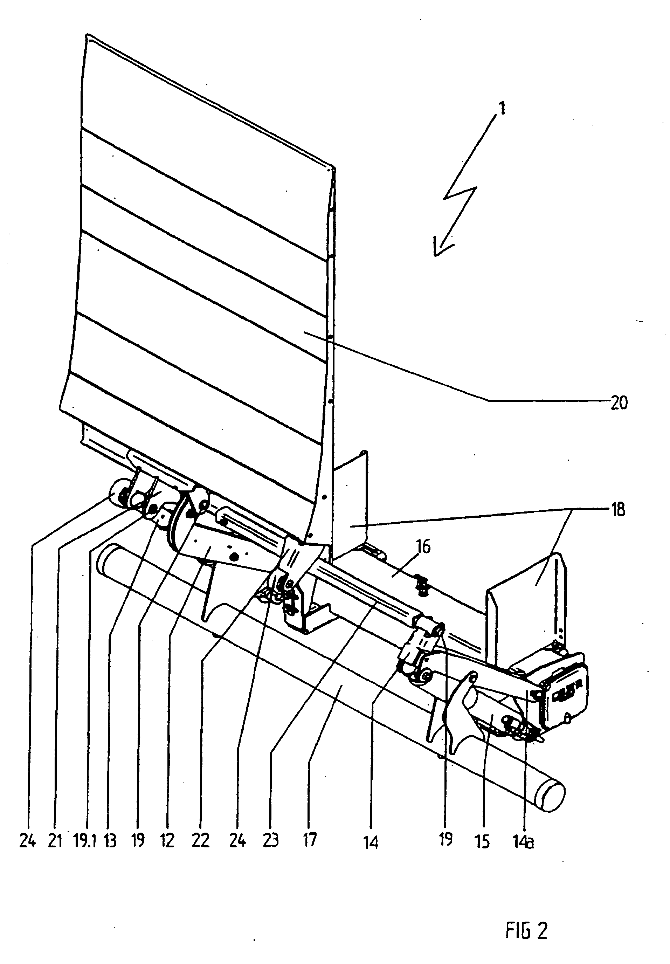

Die in **Fig.1** gezeigte Zweizylinder-Hubladebühne 1 umfasst ein im Wesentlichen parallelogrammförmiges Hubwerk **10** für eine Plattform **20.** Das Hubwerk 10 weist zwei horizontal beabstandete Tragarme **12, 14** zum Tragen der Plattform 20, einen dem einen, ersten Tragarm 12 zugeordneten Parallelzylinder **13** für das Verschwenken der Plattform 20 um die Drehachse **19** von ihrer vertikalen Fahrtstellung in ihre horizontale Arbeitsstellung und umgekehrt, einen unterhalb des anderen, zweiten Tragarms (Hubarm) 14 angeordneten Hubzylinder **15** zum Heben und Senken der Plattform 20 in ihrer horizontalen Arbeitsstellung sowie ein Torsions- und Biegeprofil **17** zur Bewegungskopplung von Hubzylinder 15 und erstem Tragarm 12 auf. Dieses Torsions- und Biegeprofil 17 bildet gleichzeitig einen Unterfahrschutz. Der Hubzylinder 15 greift an zwei Hubzylinderhebeln **14a** (Fig. 2) an und bildet mit diesem ein Kräftedreieck, wobei die Hubzylinderhebel 14a über ein Federmittel (nicht gezeigt) mit dem zweiten Tragarm 14 elastisch in Hubrichtung bewegungsgekoppelt sind. Die Hubzylinderhebel 14a sind um die Drehachse der Tragarme 12, 14 drehbar gelagert. Die Plattform 20 ist von den beiden Tragarmen 12, 14 und dem Parallelzylinder 13 getragen. Die beiden Tragarme 12, 14 bilden die eine Parallelogrammstrebe und der Parallelzylinder 13 die andere Parallelogrammstrebe des Hubwerks 10.

Bezüglich der genauen Funktionsweise wird auf die EP 1502812 A des Anmelders verwiesen.

Das Hubwerk 10 hat ein Tragrohr **16,** an dem die Tragarme 12, 14 und die Zylinder 13, 15 drehbar gelagert sind und das am Fahrgestellrahmen **11** über Aufhängeplatten **18** befestigt ist. Die Plattform 20 hat einen Anschlusskopf **21,** der über den Drehpunkt 19 (besser sichtbar in Fig. 2) drehbar mit dem ersten Tragarm 12 verbunden ist. Bei der Plattform 20 handelt es sich um eine Zweidrittelversion, die vom zweiten Tragarm 14 in Querrichtung bestandet ist. Mittels eines diesen Querabstand D überbrückenden Querträgers **23** ist die Plattform 20 auch am zweiten Tragarm 14 drehbar um die Schwenkachse 19 gelagert. Der Parallelzylinder 13 ist im Drehpunkt **19.1** (Fig. 2) am Anschlusskopf 21 gelagert. Mit dem Parallelzylinder 13 kann die Plattform 20 um etwas mehr als 90° um die Drehachse 19 aufgeschwenkt werden. Der Querträger 23 ist einerseits mit der zungenförmigen Endkante der Plattform 20 verschraubt. Das andere Ende des Querträgers 23 ist bolzenförmig ausgebildet und im Auge des zweiten Tragarms 14 gelagert. Bei dieser Version kann die Plattformbreite im Rahmen der Aufbaubreite des Fahrzeugs beliebig breit gewählt werden.

Die auf den Boden abgesenkte Plattform 20 stützt sich auf zwei Bodenrollen **24.** Die in Fig. 1 linke Bodenrolle **24** ist im Anschlusskopf 21, welcher der Hublabebühnen-Standardversion entspricht, im Drehpunkt 19.1 des Parallelzylinders 13 gelagert. Die rechte Bodenrolle 24 ist durch eine Stützkonsole **22** mit der Plattform 20 verbunden und ebenfalls um die Drehachse 19.1 gelagert.

**Fig. 2** ist eine perspektivische Ansicht der in Fig. 1 gezeigten Hubladebühne 1. Der Klarheit wegen wurde der Fahrgestellrahmen 11 nicht abgebildet, so dass die anderen Bauteile deutlicher zu erkennen sind.

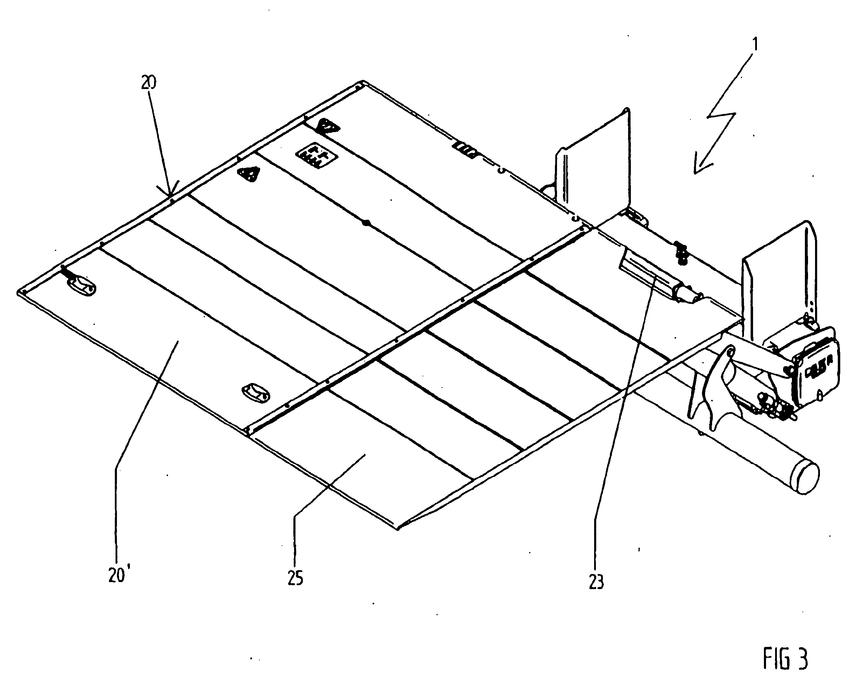

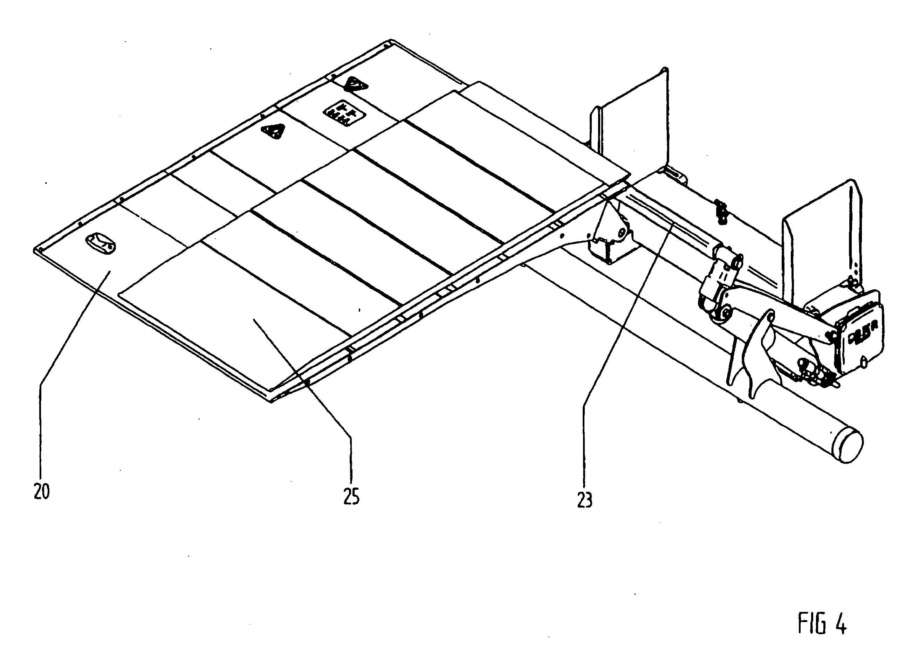

**Fig. 3** zeigt die in Fig. 1 gezeigte Zweidrittelversion-Hubladebühne 1 mit arbeitsbereiter (d.h. horizontaler) Plattform 20 auf Ladebodenhöhe des nicht dargestellten Fahrzeugs. Die Plattform 20 ist durch ein Plattform-Festteil 20' und ein Plattform-Klappteil **25** gebildet. Das Klappteil 25 ist mit dem Festteil 20' durch ein nicht näher dargestelltes Doppelgelenk mit Widerlager verbunden. Im gezeigten aufgeklappten Zustand liegt das Klappteil 25 auf dem Verbindungsträger 23. Das Klappteil 25 selbst ist als 30 bzw. 40 mm dicke Profilschweißkonstruktion ausgebildet. Im Bereich des Drehpunktes 19 ist die zungenförmige Ausbildung entsprechend des Festteils 20' gewählt. In **Fig. 4** ist das Klappteil 25 auf das Festteil 20' um 180° aufgefaltet. Damit das Klappteil 25 in der 90° senkrecht stehenden Fahrposition nicht gegen die Aufbautüren schlagen kann, ist es mit einem nicht dargestellten Verschluss gesichert.

Die Erfindung ist nicht auf die oben beschriebene Zweizylinder-Hubladebühne beschränkt, sondern kann auch bei Vierzylinder-Hubladebühnen, bei denen jedem der beiden Tragarme jeweils ein Hub- und ein Parallelzylinder zugeordnet ist, angewandt werden.

## Patentansprüche

1. Hubladebühne (1) zur Befestigung an Fahrzeugen, mit einer Plattform (20) und einem im Wesentlichen parallelogrammförmigen Hubwerk (10), das zwei horizontal beabstandete Tragarme (12, 14) zum Tragen der Plattform (20), mindestens einen Parallelzylinder (13) für das Verschwenken der Plattform (20) um eine Schwenkachse (19) von ihrer vertikalen Fahrtstellung in ihre horizontale Arbeitsstellung und umgekehrt sowie mindestens einen Hubzylinder (15) zum Heben und Senken der Plattform (20) in ihrer Arbeitsstellung umfasst, wobei ein Plattform-Festteil (20') der Plattform (20) von dem einen, zweiten Tragarm (14) in Querrichtung beabstandet ist, **dadurch gekennzeichnet, dass** das Plattformfestteil (20') mittels eines diesen Querabstand (O) überbrückenden Querträgers (23) am zweiten Tragarm (14) drehbar um die Schwenkachse (19) gelagert ist und dass an der zum zweiten Tragarm (14) weisenden Seite des Plattform-Festteils (20') ein Plattform-Klappteil (25) um 180° schwenkbar gelagert ist, wobei das Plattform-Festteil und das Plattform-Klappteil die Plattform (20) bilden.

2. Hubladebühne nach Anspruch 1, **dadurch gekennzeichnet, dass** die Plattform (20) bzw. das Platiform-Festteil (20') einen Anschlusskopf (21) aufweist, an dem der erste Tragarm (12) und der Parallelzylinder (13) angreifen.

3. Hubladebühne nach Anspruch 1 oder 2, **dadurch gekennzeichnet, dass** der Querträger (23) an der Plattform (20) bzw. dem Plattform-Festteil (20') angeschraubt ist.

4. Hubladebühne nach einem der vorhergehenden Ansprüche, **dadurch gekennzeichnet, dass** der Querträger (23) ein bolzenförmiges Ende aufweist, das am zweiten Tragarm (14) gelagert ist.

5. Hubladebühne nach einem der Ansprüche 1-4, **dadurch gekennzeichnet, dass** das Plattform-Klappteil (25) auf dem Querträger (23) aufliegt.

6. Hubladebühne nach einem der vorhergehenden Ansprüche, **dadurch gekennzeichnet, dass** die Plattform (20) oder das Plattform-Festteil (20') zwei beabstandete Bodenrollen (24) aufweist.

7. Hubladebühne nach einem der vorhergehenden Ansprüche, **dadurch gekennzeichnet, dass** der Hubzylinder (15) an mindestens einem Hubzylinderhebel (14a), der um die Schwenkachse der Tragarme (12, 14) drehbar gelagert ist, angreift und mit diesem ein Kräftedreieck bildet, wobei der zweite Tragarm (14) mit dem Hubzylinderhebel (14a) elastisch in Hubrichtung bewegungsgekoppelt und der erste Tragarm (12) mittels eines Torsions- und Biegeprofils (17) mit dem Hubzylinderhebel (14a) verbunden ist.

## Claims

1. Loading platform (1) for fixing to vehicles, having a platform (20) and substantially parallelogram-like lifting gear (10), which comprises two horizontally spaced carrier arms (12, 14) to carry the platform (20), at least one parallel cylinder (13) to pivot the platform (20) about a pivot axis (19) from its vertical travelling position into its horizontal working position and vice versa, and also at least one lifting cylinder (15) to raise and lower the platform (20) in its working position, wherein a fixed platform part (20') of the platform (20) is spaced apart in the transverse direction from the one, second carrier arm (14) **characterized in that** the fixed platform part (20') by means of a crossbeam (23) bridging this transverse spacing (D) is mounted at the second carrier arm (14) such that it can be pivoted about the pivot axis (19), and that on the side of the fixed platform part (20') facing towards the second carrier arm (14), a folding platform part (25) is mounted such that it can be pivoted through 180°, the fixed platform part and the folding platform part forming the platform (20).

2. Loading platform according to Claim 1, **characterized in that** the platform (20) or the fixed platform part (20') has a connecting head (21), on which the first carrier arm (12) and the parallel cylinder (13) act.

3. Loading platform according to Claim 1 or 2, **characterized in that** the crossbeam (23) is screwed to the platform (20) or to the fixed platform part (20').

4. Loading platform according to one of the preceding claims, **characterized in that** the crossbeam (23) has a pin-like end which is mounted on the second carrier arm (14).

5. Loading platform according to one of Claims 1-4, **characterized in that** the folding platform part (25) rests on the crossbeam (23).

6. Loading platform according to one of the preceding claims, **characterized in that** the platform (20) or the fixed platform part (20') has two spaced-apart floor rollers (24).

7. Loading platform according to one of the preceding claims, **characterized in that** the lifting cylinder (15) acts on at least one lifting cylinder lever (14a) which is mounted such that it can rotate about the pivot axis of the carrier arms (12, 14) and, with the said lever, forms a force triangle, the second carrier arm (14) being coupled to the lifting cylinder lever (14a) elastically in terms of movement in the lifting direction and the first carrier arm (12) being connected to the lifting cylinder lever (14a) by means of a torsion and bending profile (17).

## Revendications

1. Hayon élévateur de chargement (1) destiné à être fixé à des véhicules et comprenant une plate-forme (20) et un groupe de levage (10) sensiblement en forme de parallélogramme, qui englobe deux bras de support (12, 14) espacés horizontalement et destinés à supporter la plate-forme (20), au moins un vérin parallèle (13) pour le pivotement de la plate-forme (20) autour d'un axe de pivotement (19) de sa position verticale en circulation à sa position horizontale de travail et inversement, ainsi qu'au moins un vérin de levage (15) pour soulever et abaisser la plate-forme (20) dans sa position de travail,
une partie fixe de plate-forme (20') étant espacée, dans la direction transversale, de l'un, à savoir du deuxième bras de support (14), et étant montée rotative autour de l'axe de rotation (19) sur le deuxième bras de support (14), au moyen d'une traverse (23) comblant cette distance d'espacement transversale (D), **caractérisé en ce que** sur le côté de la partie fixe de plate-forme (20'), qui est dirigé vers le deuxième bras de support (14), est montée une partie rabattable de plate-forme (25) pouvant pivoter de 180°, la partie fixe de plate-forme (20') et la partie rabattable de plate-forme (25) formant ladite plate-forme (20).

2. Hayon élévateur de chargement selon la revendication 1, **caractérisé en ce que** la plate-forme (20) ou la partie fixe de plate-forme (20') comporte une tête de raccordement (21) avec laquelle interagissent le premier bras de support (12) et le vérin parallèle (13).

3. Hayon élévateur de chargement selon la revendication 1 ou 2, **caractérisé en ce que** la traverse (23) est vissée à la plate-forme (20) ou à la partie fixe de plate-forme (20').

4. Hayon élévateur de chargement selon l'une des revendications précédentes, **caractérisé en ce que** la traverse (23) présente une extrémité en forme de tourillon, qui est montée dans le deuxième bras de support (14).

5. Hayon élévateur de chargement selon une des revendications 1-4, **caractérisé en ce que** la partie rabattable de plate-forme (25) repose sur la traverse (23).

6. Hayon élévateur de chargement selon l'une des revendications précédentes, **caractérisé en ce que** la plate-forme (20) ou la partie fixe de plate-forme (20') possède deux galets ou roulettes d'appui au sol (24) mutuellement espacés.

7. Hayon élévateur de chargement selon l'une des revendications précédentes, **caractérisé en ce que** le vérin de levage (15) agit sur au moins un levier de vérin de levage (14a) qui est monté rotatif autour de l'axe de pivotement des bras de support (12, 14), et forme avec celui-ci un triangle de forces, le deuxième bras de support (14) étant couplé en mouvement, de manière élastique dans la direction du levage, avec le levier de vérin de levage (14a), et le premier bras de support (12) étant relié au levier de vérin de levage (14a) au moyen d'un profilé de torsion et de flexion (17).
